# EUROPEAN PATENT SPECIFICATION

(11) **EP 0 897 207 B1**
(45) Date of publication and mention of the grant of the patent: **25.09.2002**
(21) Application number: 98410089.1
(22) Date of filing: 07.08.1998
(51) Int. Cl.: H02B 1/20

(54) **Improvements in and relating to electrical distribution equipment**
Verbesserung von elektrischen Verteilungsgeräten
Améliorations aux équipements de distribution électrique

(30) Priority: 13.08.1997 GB 9717186
(43) Date of publication of application: 17.02.1999
(73) Proprietor: Schneider Electric Industries SAS, 92500 Rueil-Malmaison (FR)
(72) Inventor: Bennett, David, Swindon, Wiltshire, SN2 2QG (GB)
(74) Representative: Ritzenthaler, Jacques

(56) References cited:
- EP-A- 0 748 013
- EP-A- 0 788 205
- GB-A- 2 230 901
- US-A- 3 097 326

## Description

The invention relates to electrical distribution equipment and more particularly to electrical loadcentres and parts thereof.

United Kingdom patent specification no 2,264,399 shows a typical loadcentre wall mountable enclosure with an arrangement of a three phase bus bar system in which three live outgoer bus bars, one for each phase, are located juxtaposed in a single plane with a separate terminal block being provided for the connection of multiple neutrals.

In some instances it would be useful to have a further, neutral bus bar adjacent the live bus bars.

EP 0788205 discloses an electric loadcentre for use in an electric loadcentre busbar. The loadcentre is mountable in a wall and comprises an assembly including mounting means locating a plurality of longitudinally extending planar live and neutral outgoers busbars. The busbars are located in superposed planes. The assembly is formed in a manner to allow a circuit breaker or other outgoer to be connected to at least any preselected one of said live or neutral outgoer busbars at any one of a plurality of outgoer positions spaced along the length of said busbars.

According to one aspect of the invention there is provided an assembly according to claim 1.

The mounting means may be moulded of synthetic plastics material and may be formed to mount a circuit breaker at each outgoer position along at least one side thereof.

The mounting means may be formed with outwardly extending location ribs or fins for location with slotted cover members of circuit breakers to be located therewith, in use.

The neutral outgoer bus bar may be located above the live outgoer bus bars and an electrically insulting cover member is located over the neutral outgoer bus bar.

The mounting means may locate a respective slideable switching link member for each outgoer position for selectively connecting one of the live outgoer bus bars to a connector member for locating in a circuit breaker and at least one add-on bar located to connect the neutral outgoer bus bar to a circuit-breaker at the respective outgoer position, such add-on bar(s) being formed to prevent the slidable switching link member from being actuated to provide a connection from a live outgoer bus bar to its respective connector member.

Each slidable switching link member may include an upwardly depending manually actuable member and each add-on bar includes an aperture for surrounding the manually actuable member to locate it in a non-connecting position with regard to its respective live outgoer bus bar.

Each add-on bar may have an electrically insulting cover member located there over, may be attached to the neutral outgoer bus bar by a respective screw or may plug into the neutral outgoer bus bar.

The live outgoer bus bars may carry connector means for connection with a clip connector adapter attached to an outgoer device and at least one add-on bar attached to the neutral outgoer bus bar located to be connectable directly to an outgoer device as an alternative to the clip connector adapter.

The neutral outgoer bus bar may be formed with at least one aperture for each outgoer position for receiving a clip connector adapter of an outgoer device to provide electrical connection thereto.

The foregoing and further features of the invention may be more readily understood from the following description of some preferred embodiments thereof, by way of example, with reference to the accompanying drawings, in which :
Fig. 1 is a plan view of an assembly for use in a wall mountable electrical loadcentre with three outgoers attached thereto ;
Fig. 2 is an end elevational view partly in section, of the assembly of Fig. 1 ;
Fig. 3 : is an end sectional view, showing an alternative, plug-in connection to the neutral outgoer bus bar of Fig. 2 ;
Fig. 4 is a plan view of an alternative arrangement to Fig. 1 ;
Fig. 5 is an end elevational view of the arrangement of Fig. 4 ;
Fig. 6 is a perspective view of an arrangement of Figs. 1, 2 and 3 and
Fig. 7 is a perspective view of a further alternative assembly.

Referring now to Figs, 1 and 2 of the drawings there is shown an assembly for use in a wall mountable electrical loadcentre including a mounting means 10 moulded of synthetic plastics material. Mounting means 10 houses three longitudinally extending planar live outgoer bus bars L1, L2 and L3 at a lower level therein and locates a superposed coplanar neutral outgoer bus bars 11 at the top thereof, with an electrically insulating cover member 12 located thereover.

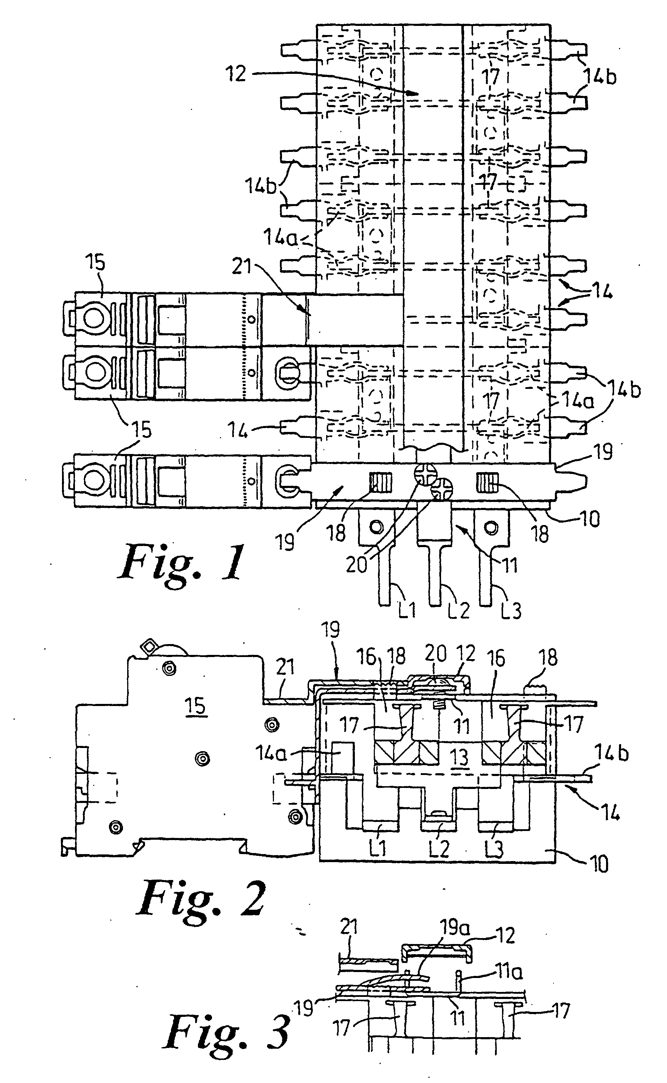

Each of the live outgoer bus bars L1, L2 and L3 has an electrically conductive link member 13 (one only shown) attached thereto and a corresponding connector member 14 is provided for each outgoer position, the connector member 14 having a portion 14a to be connectable to a respective link member 13 and a portion 14b protruding from mounting means 10 to be connectable to an outgoer, such as a circuit breaker 15. A slidably mounted member 16, formed of electrically insulting material, carries an electrically conductive inverted "T" shaped bidding member 17 and is formed with a manually actuable member or button 18. Member 16 is slidable from an "off" position, as shown at the left of Fig. 2, where bridging member 17 is located on link member 13 spaced from connector portion 14b, to an "on" position, as shown at the right of Fig. 2 where bridging member 17 spans and connects link member 13 and hence bus bar L2 to connector portion 14a to enable an outgoer to be supplied from connector portion 14b.

The forgoing describes normal "on", "off" connection of an outgoer 15 to one of the live outgoer bus bars L1, L2 and L3. When an outgoer 15 is to be connected to the neutral outgoer bus bar 11 an add-on bar 19 is provided which is attached to neutral outgoer bus bar 11 by a screw 20 and extended over the top and down the side of mounting means 10 to engage in outgoer 15. The add-on bar 19 is formed with an aperture which locates over manually actuable member 18 to lock it in its "off" position to prevent a short circuit between the neutral outgoer bus bar 11 and one of the live outgoer bus bars L1, L2 or L3. A cover member 21 is located over the add-on bar 19.

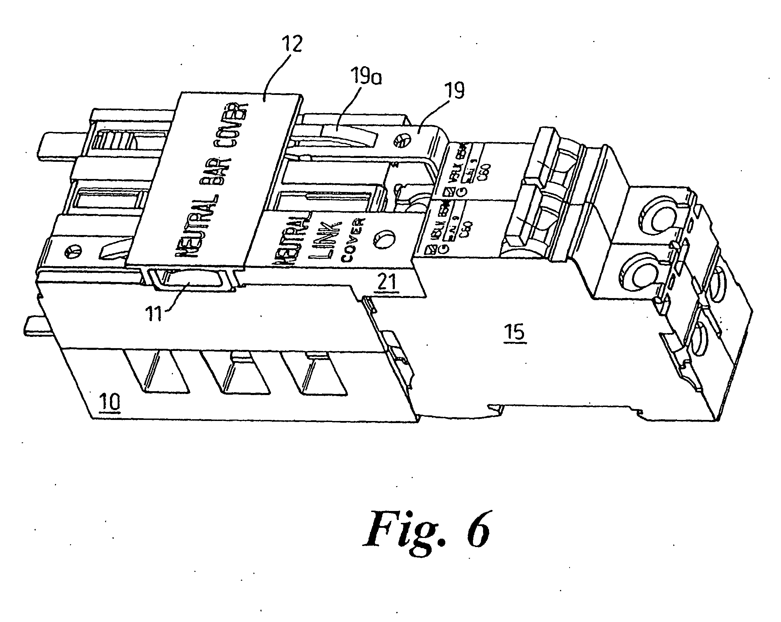

Figs. 3 and 6 show a modified arrangement of the Figs 1 and 2 assembly were the neutral outgoer bus bar 11 is of channel transverse cross section with an aperture 11a formed in the walls thereof at each outgoer position. The add-on bar 19 is formed with a sprung pronged end 19a for locating and engaging in the aperture in bus bar 11.

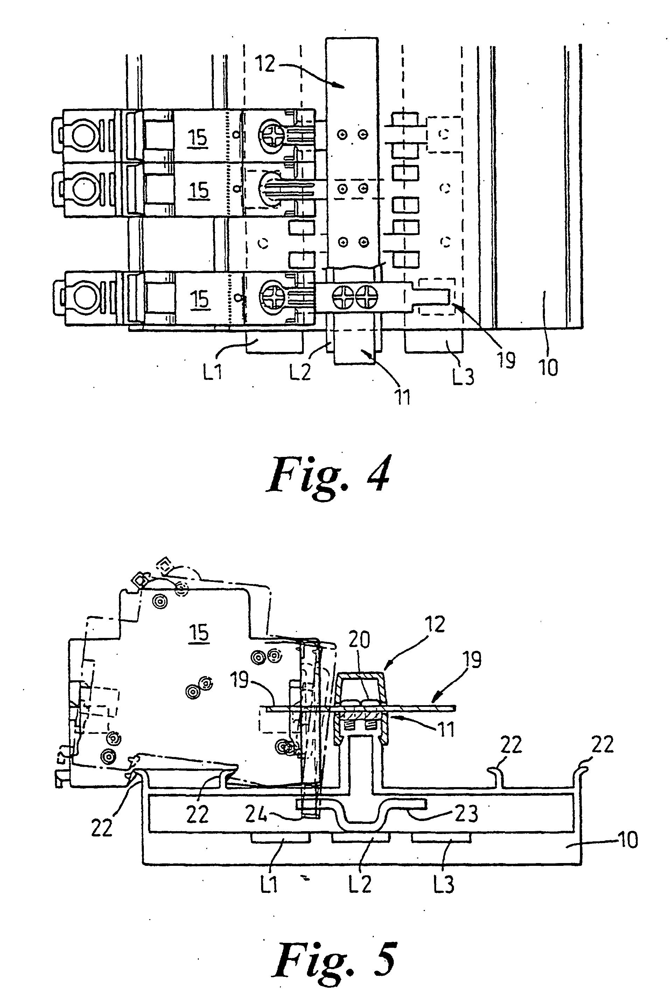

Referring now to Figs. 4 and 5 the mounting means 10 is formed with outwardly extending location ribs or fins 22 for location with the slotted cover members of circuit breakers 15 to be located thereon. With this arrangement each of the live outgoer bus bars L1. L2 and L3 carry connector means 23 (one only shown) for engagement by a clip connector adapter 24.

Our copending United Kingdom patent application n° 9512220.6 (publication n° 2,301,940) shows the detail of such an adapter. When it is required to provide connection from neutral outgoer bus bar 11 to outgoer 15 the add-on bar 19 is utilised to replace the clip connector adapter 24.

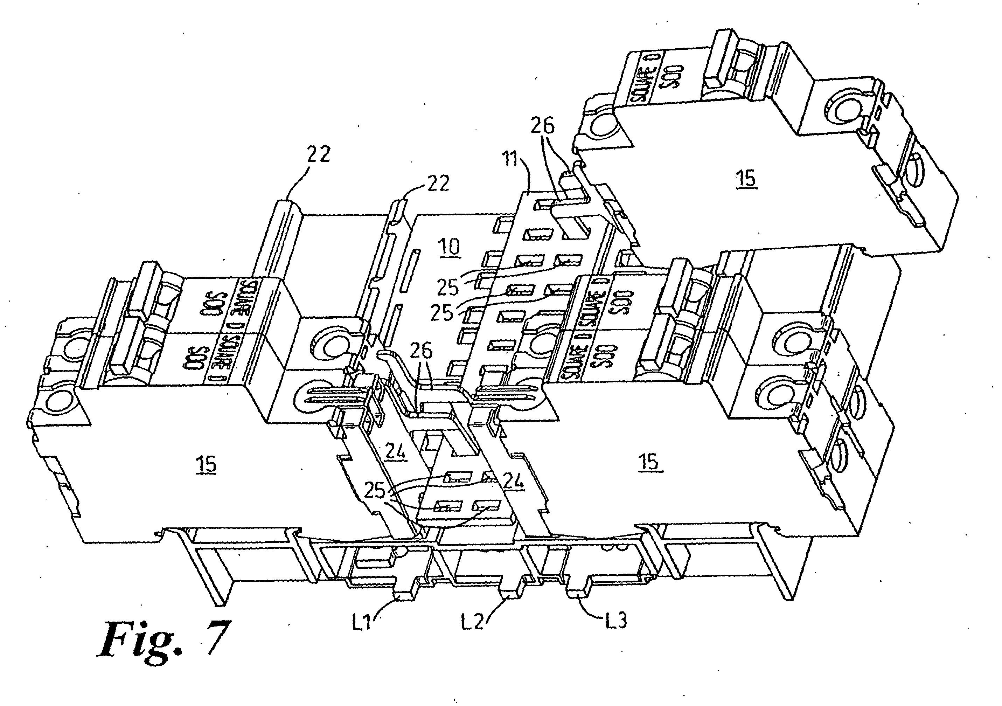

Fig. 7 shows a further alternative arrangement in which the neutral outgoer bus bar 11 is formed with two apertures 25 located adjacent each outgoer position, which are engageable by modified clip connector adapters 26 and which replace adapters 24. A cover member (not shown) would be located over bus bar 11 and over each adapter 26.

## Claims

1. An electrical load centre bus bars mounting assembly, the load centre being mountable in a wall, the assembly including mounting means (10) locating a plurality of longitudinally extending planar live outgoer bus bars (L1,L2,L3) juxtaposed in a single plane, a longitudinally extending planar neutral outgoer bus bar (11) being located in a superposed plane spaced from said live outgoer bus bars (L1,L2,L3), the assembly being formed for allowing a circuit breaker (15) or other outgoer to be connected to at least any preselected one of said live or neutral outgoer bus bars (L1,L2,L3,11) at any one of a plurality of outgoer positions spaced along the length of said bus bars, at least one add-on bar (19) being provided to connect the neutral outgoer bus bar (11) to a circuit breaker (15) at the respective outgoer position.

2. An assembly as claimed in claim 1, wherein the mounting means (10) is moulded of synthetic plastics material.

3. An assembly as claimed in claim 2, wherein the mounting means (10) is formed to mount a circuit breaker (15) at each outgoer position along at least one side thereof.

4. A assembly as claimed in claim 2 or 3, wherein the mounting means (10) is formed with outwardly extending location ribs or fins (22) for location with slotted covers members of circuit breakers (15) to be located therewith, in use.

5. An assembly as claimed in any preceding claim, wherein the neutral outgoer bus bar (11) is located above the live outgoer bus bars (L1,L2,L3) and an electrically insulating cover member is located over the neutral outgoer bus bar (11).

6. An assembly as claimed in any preceding claim, wherein the mounting means (10) locates a respective slidable switching link member (13) for each outgoer position for selectively connecting one of the live outgoer bus bars (L1,L2,L3) to a connector member (14) for locating in a circuit breaker (15) and at least one add-on bar (19) located to connect the neutral outgoer bus bar (11) to a circuit breaker (15) at the respective outgoer position, such add-on bar(s) (19) being formed to prevent the slidable switching link member (17) from being actuated to provide a connection from a live outgoer bus bar (L1,L2,L3) to its respective connector member (14).

7. An assembly as claimed in claim 6, wherein each slidable switching link member (17) includes an upwardly depending manually actuable member (18) and each add-on bar (19) includes an aperture for surrounding the manually actuable member (18) to locate it in a non-connecting position with regard to its respective live outgoer bus bar (L1,L2,L3).

8. An assembly as claimed in claim 6 or 7, wherein each add-on bar has (19) an electrically insulating cover member located there over.

9. An assembly as claimed in claim 6, 7 or 8, wherein each add-on bar (19) is attached to the neutral outgoer bus bar (11) by a respective screw (20).

10. An assembly as claimed in claim 6, 7 or 8, wherein each add-on bar (19) is formed to plug into the neutral outgoer bus bar (11).

11. An assembly as claimed in any one of claims 1 to 5 inclusive wherein the live outgoer bus bars (L1,L2,L3) carry connector means (23) for connection with a clip connector adapter (24) attached to an outgoer device (15) and at least one add-on bar (19) attached to the neutral outgoer bus bar (11) located to be connectable directly to an outgoer device (19) as an alternative to the clip connector adapter (24).

12. An assembly as claimed in any one of claims 1 to 5 inclusive, wherein the neutral outgoer bus bar (11) is formed with at least one aperture for each outgoer position for receiving a clip connector adapter (24) of an outgoer device (15) to provide electrical connection thereto.

## Patentansprüche

1. Sammelschienen-Montageanordnung für einen elektrischen Installationsverteiler, welcher Installationsverteiler für Wandmontage ausgelegt ist und welche Anordnung Montagemittel (10) mit mehreren, in einer Ebene in Längsrichtung nebeneinander angeordneten flachen Phasenleiter-Abgangsschienen (L1, L2, L3) sowie einer, in einer darüber liegenden Ebene, in einem Abstand von den genannten Phasenleiter-Abgangsschienen (L1, L2, L3) in Längsrichtung angeordneten flachen Neutralleiter-Abgangsschiene (11) umfaßt, wobei die Anordnung so ausgebildet ist, daß ein Leitungsschutzschalter (15) oder ein sonstiges Abgangsgerät an einer beliebigen der über die Länge der genannten Sammelschienen verteilten Abgangspositionen an mindestens eine bestimmte der genannten Phasenleiter- oder Neutralleiter-Abgangsschienen (L1, L2, L3, 11) angeschlossen werden kann, und mindestens eine Zusatzschiene (19) verwendet wird, um die Neutralleiter-Abgangsschiene (11) an der jeweiligen Abgangsposition mit einem Leitungsschutzschalter (15) zu verbinden.

2. Anordnung nach Anspruch 1, **dadurch gekennzeichnet, daß** das Montagemittel (10) als Kunststoff-Formteil ausgebildet ist.

3. Anordnung nach Anspruch 2, **dadurch gekennzeichnet, daß** das Montagemittel (10) so ausgebildet ist, daß mindestens entlang einer seiner Seiten an jeder Abgangsposition ein Leitungsschutzschalter (15) montiert werden kann.

4. Anordnung nach Anspruch 2 oder 3, **dadurch gekennzeichnet, daß** das Montagemittel (10) nach außen hervorstehende Halterippen oder -stege (22) aufweist, die dazu dienen, mit den genuteten Gehäusen von Leitungsschutzschaltern (15) zusammenzuwirken, die zum Betrieb auf ihnen montiert werden sollen.

5. Anordnung nach irgendeinem der vorhergehenden Ansprüche, **dadurch gekennzeichnet, daß** die Neutralleiter-Abgangsschiene (11) oberhalb der Phasenleiter-Abgangsschienen (L1, L2, L3) angeordnet und auf der Neutralleiter-Abgangsschiene (11) eine Isolierstoffabdeckung angebracht ist.

6. Anordnung nach irgendeinem der vorhergehenden Ansprüche, **dadurch gekennzeichnet, daß** das Montagemittel (10) an jeder Abgangsposition ein verschiebbares Umschalt-Verbindungsglied (13) aufweist, um wahlweise jeweils eine der Phasenleiter-Abgangsschienen (L1, L2, L3) mit einem Anschlußelement (14) zu verbinden, das dazu dient, in einen Leitungsschutzschalter (15) einzugreifen, sowie mindestens eine Zusatzschiene (19) aufweist, die dazu dient, die Neutralleiter-Abgangsschiene (11) an der jeweiligen Abgangsposition mit einem Leitungsschutzschalter zu verbinden, wobei diese Zusatzschiene(n) (19) so ausgebildet ist (sind), daß sie eine Betätigung des verschiebbaren Umschalt-Verbindungsglieds (17) zur Herstellung einer Verbindung zwischen einer Phasenleiter-Abgangsschiene (L1, L2, L3) und dem zugeordneten Anschlußglied (14) verhindert(n).

7. Anordnung nach Anspruch 6, **dadurch gekennzeichnet, daß** jedes verschiebbare Umschalt-Verbindungsglied (17) ein nach oben hervorstehendes Handbetätigungsglied (18) umfaßt und in jeder Zusatzschiene (19) eine Öffnung zur Umfassung des Handbetätigungsglieds (18) ausgebildet ist, um dieses in einer Trennstellung bezüglich der jeweiligen Phasenleiter-Abgangsschiene (L1, L2, L3) zu positionieren.

8. Anordnung nach Anspruch 6 oder 7, **dadurch gekennzeichnet, daß** auf jeder Zusatzschiene (19) eine Isolierstoffabdeckung angebracht ist.

9. Anordnung nach Anspruch 6, 7 oder 8, **dadurch gekennzeichnet, daß** jede Zusatzschiene (19) mittels einer zugeordneten Schraube (20) auf der jeweiligen Neutralleiter-Abgangsschiene (11) befestigt ist.

10. Anordnung nach Anspruch 6, 7 oder 8, **dadurch gekennzeichnet, daß** jede Zusatzschiene (19) in die Neutralleiter-Abgangsschiene (11) eingesteckt werden kann.

11. Anordnung nach irgendeinem der Ansprüche 1 bis 5, **dadurch gekennzeichnet, daß** die Phasenleiter-Abgangsschienen (L1, L2, L3) Verbindungsmittel (23) zur Verbindung mit einem, an einem Abgangsgerät (15) montierten Steckverbindungsadapter (24) umfassen, und auf der Neutralleiter-Abgangsschiene (11) mindestens eine Zusatzschiene (19) befestigt ist, die dazu dient, alternativ zur Verwendung des Steckverbindungsadapters (24) direkt an ein Abgangsgerät (15) angeschlossen zu werden.

12. Anordnung nach irgendeinem der Ansprüche 1 bis 5, **dadurch gekennzeichnet, daß** in der Neutralleiter-Abgangsschiene (11) an jeder Abgangsposition mindestens eine Öffnung zur Aufnahme eines Steckverbindungsadapters (24) eines Abgangsgeräts (15) ausgebildet ist, um die elektrische Verbindung mit diesem herzustellen.

## Revendications

1. Ensemble de montage de barres d'un tableau de répartition électrique, le tableau de répartition étant du type à montage mural, l'ensemble comprenant des moyens de montage (10) logeant une pluralité de barres de départ de phase (L1,L2,L3) planes qui s'étendent longitudinalement, juxtaposées dans un même plan, une barre plane de départ de neutre (11) qui s'étend longitudinalement en étant positionnée dans un plan superposé et espacé par rapport auxdites barres de départ de phase (L1,L2,L3), l'ensemble étant conformé de manière à permettre le raccordement d'un disjoncteur (15) ou d'un autre départ à au moins une, prédéterminée, desdites barres de départ de phase ou de neutre (L1,L2,L3,11) sur l'une quelconque d'une pluralité de positions de départ espacées le long desdites barres, au moins une barre rajoutée (19) étant prévue pour relier la barre de départ de neutre (11) à un disjoncteur (15) sur la position de départ correspondante.

2. Ensemble selon la revendication 1, **caractérisé en ce que** les moyens de montage (10) sont moulés en un matériau plastique synthétique.

3. Ensemble selon la revendication 2, **caractérisé en ce que** les moyens de montage (10) sont conformés de manière à permettre le montage d'un disjoncteur (15) à chaque position de départ le long d'au moins un côté de celui-ci.

4. Ensemble selon la revendication 2 ou 3, **caractérisé en ce que** les moyens de montage (10) comprennent des nervures ou ailettes de positionnement (22) qui s'étendent vers l'extérieur pour coopérer avec des éléments de couvercles à encoches de disjoncteurs (15) associés à ces derniers, lors de l'utilisation.

5. Ensemble selon l'une quelconque des revendications précédentes, **caractérisé en ce que** la barre de départ de neutre (11) se situe au-dessus des barres de départ de phase (L1,L2,L3), et qu'un couvercle électriquement isolant est prévu au-dessus de la barre de départ de neutre (11).

6. Ensemble selon l'une quelconque des revendications précédentes, **caractérisé en ce que** les moyens de montage (10) comprennent un élément de liaison commutateur pouvant coulisser (17) respectif pour chaque position de départ afin de relier sélectivement l'une des barres de départ de phase (L1,L2,L3) à un élément de liaison (14) prévu dans un disjoncteur (15), ainsi qu'au moins une barre rajoutée (19) prévue pour relier la barre de départ de neutre (11) à un disjoncteur (15) sur la position de départ respective, une telle ou de telles barre(s) d'appoint (19) étant conformée(s) de manière à empêcher l'actionnement de l'élément de liaison commutateur à glissement (17) pour raccorder une barre de départ de phase (L1,L2,L3) à son élément de liaison respectif(14).

7. Ensemble selon la revendication 6, **caractérisé en ce que** chaque élément de liaison commutateur à glissement (17) comprend un élément actionnable manuellement (18) sollicité vers le haut, et que chaque barre rajoutée (19) comprend une ouverture pour encadrer l'élément actionnable manuellement (18), afin de positionner celui-ci dans une position de déconnexion par rapport à sa barre de départ de phase respective (L1,L2,L3).

8. Ensemble selon la revendication 6 ou 7 **caractérisé en ce que** chaque barre rajoutée (19) comprend un couvercle électriquement isolant (18) positionné au-dessus de celle-ci.

9. Ensemble selon la revendication 6, 7 ou 8 **caractérisé en ce que** chaque barre rajoutée (19) est solidarisée à la barre de départ de neutre (11) au moyen d'une vis respective (20).

10. Ensemble selon la revendication 6, 7 ou 8 **caractérisé en ce que** chaque barre rajoutée (19) est conformée de manière à s'engager dans la barre de départ de neutre (11).

11. Ensemble selon l'une quelconque des revendications 1 à 5, **caractérisé en ce que** les barres de départ de phase (L1,L2,L3) portent des moyens de raccordement (23) à un adaptateur de connexion à encliquetage (24) solidarisé à un dispositif de départ (15), et au moins une barre rajoutée (19) solidarisée à la barre de départ de neutre (11), et positionnée pour pouvoir se raccorder directement à un dispositif de départ (15), comme une alternative à l'adaptateur de raccordement à encliquetage (24).

12. Ensemble selon l'une quelconque des revendications 1 à 5, **caractérisé en ce que** la barre de départ de neutre (11) est munie d'au moins une ouverture pour chaque position de départ pour recevoir un adaptateur de raccordement à encliquetage (24) d'un dispositif de départ (15), afin de réaliser le raccordement électrique avec celui-ci.
